# EUROPEAN PATENT APPLICATION

(11) **EP 4 787 642 A1**
(43) Date of publication of application: **05.08.2026**
(21) Application number: 25155728.6
(22) Date of filing: 04.02.2025
(51) Int. Cl.: H02G 1/08, F03D 80/80

(54) **CABLE PULLING ARRANGEMENT**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The invention describes a cable pulling arrangement (1) for use in the installation of power cables (5) in a wind turbine tower (2), comprising a transport unit (11) adapted to transport a winch assembly (12) between levels (22, 28) of the tower (2); a docking assembly (14) adapted to dock the transport unit (11) to the tower (2); and a cable guide (13) adapted to guide a winch wire (122) between levels (22, 28) of the tower (2) during a cable pulling procedure. The invention further describes a method of performing a cable pulling procedure using such a cable pulling arrangement (1).

## Description

### Background

A wind turbine that exports power must be connected to a power network, i.e. power cables must be provided in the wind turbine tower, extending towards the top of the tower to a hang-off assembly and for connection to the generator.

The installation of such a wind turbine can include a cable installation procedure in which multiple high-voltage cables are arranged in the tower, extending towards the top of the tower for attachment to a hang-off assembly. Such power cables can be very heavy, particularly in the case of a tall tower. For example, 100 metres of cable can weigh in the order of 1.5 metric tonnes. During the cable installation procedure, the free end of the cable is pulled or lifted towards the top of the tower.

There are various ways of pulling a heavy power cable to an upper level of a wind turbine tower. For example, it is known to mount a heavy-duty cable pulling arrangement on top of the tower for the cable installation task. This is done by hoisting the cable pulling arrangement into place on the open top of the tower using a heavy-duty crane with a sufficiently long jib, for example a deck-mounted crane of a jackup vessel. The cable pulling arrangement is equipped with a chain hoist which is operated to pull the free end of a power cable to the top of the tower. The cable installation task may take some time, during which the open tower must be protected from rain. To this end, a prior art cable pulling arrangement may also include a cover shaped to close off the tower. The total weight of such a cable pulling arrangement can be in the order of 5 metric tonnes. For safety reasons, such a cable pulling arrangement can only be handled by crane during favourable weather conditions, i.e. at low wind speeds. As tower heights (and cable lengths) increase, the size and weight of such a cable pulling unit will also increase, and a correspondingly lower safe wind speed limit may shrink the duration of a favourable weather "window". Resulting weather-related delays can increase, adding to the overall cost of installation.

Another drawback of the known approach is that, for some time after removing a tower cover (in order to mount the cable pulling arrangement), and for some time after removing the cable pulling arrangement (before the tower cover can be replaced), the tower is open to weather. This can lead to further costs if air-conditioners must be installed to remove unwanted moisture from the tower interior.

It is therefore an object of the invention to provide a more economical way of performing such a cable installation procedure. This object is achieved by the claimed cable pulling arrangement and by the claimed method of performing a cable pulling procedure.

### Description

It shall be understood that the claimed cable pulling arrangement is intended for use in the installation of power cables in a wind turbine tower. As explained above, it is necessary to pull a heavy power cable from a lower level to an upper level of the tower. Since power cables are generally laid below ground level or on the seabed, the expression "lower level" can be interpreted to mean near the base of the tower, for example in the upper region of a transition piece of an offshore wind turbine. An "upper level" of the wind turbine tower can be a platform or similar, installed near the top of the tower.

According to the invention, the cable pulling arrangement comprises a transport unit adapted to transport a winch assembly in the interior of a tower, i.e. the transport unit is deployed in the interior of the tower to move the winch assembly between levels of the tower. It shall be understood in the following that the transport unit is deployed in the interior of the tower to move the winch assembly from a lower level of the tower to an upper level of the tower, and vice versa. The cable pulling arrangement further comprises a docking assembly adapted to dock the transport unit (along with the winch assembly) to an essentially immovable surface, e.g. to an interior surface of the tower. The cable pulling arrangement further comprises a cable guide adapted to guide a winch wire between levels of the tower during a cable pulling procedure.

An advantage of the inventive cable pulling arrangement is that it can be realised at favourably low cost. Furthermore, since the transport unit need not be much larger than the winch assembly, it can be favourably compact and therefore relatively easy to transport. The inventive cable pulling arrangement does not require a crane to convey it to the upper level of the tower, and can therefore be deployed even in unfavourable weather conditions. As a result, significant cost savings can be achieved in the case of an offshore wind turbine installation, since the power cables can be pulled to the upper tower level independently of the weather conditions.

As explained above, some time can elapse between construction of a wind turbine tower and installation of the nacelle, and the open top of the tower is generally covered to protect it from rain, snow, etc. until the nacelle can be installed. In the following, it shall be assumed that if such a tower cover is in place, it remains in place during the cable pulling procedure. An advantage of the present invention is that there is no need to remove such a tower cover at any stage for the cable pulling task.

According to the invention, the method of performing a cable pulling procedure using the inventive arrangement comprises preparatory steps to install the cable pulling arrangement in the wind turbine tower, subsequent steps of performing the cable pulling procedure, and final steps of uninstalling the cable pulling arrangement. The preparatory steps of the method include deploying the transport unit to convey the winch assembly to an upper level of the tower; docking the transport unit to an interior surface of the tower; and then deploying the cable guide to guide the winch wire from the upper level of the tower to a lower level of the tower.

An advantage of the inventive method is that the initial (and final) stages involve little expense, since there is no need to hire a crane (and jackup vessel, in the case of an offshore wind turbine tower) to install the cable pulling arrangement in the tower. Instead, the transport unit (loaded with the winch) can be brought to the base of the tower, moved into the tower interior, and then raised from the base of the tower to the upper level. This can be done using equipment already available for the tower assembly task, for example an internal hoist or service elevator. After completing the cable pulling procedure, such steps are carried out in reverse order to return the transport unit (loaded with the winch) to the base of the tower. The same applies to any other components of the cable pulling arrangement, for example the cable guide.

Particularly advantageous embodiments and features of the invention are given by the dependent claims, as revealed in the following description. Features of different claim categories may be combined as appropriate to give further embodiments not described herein.

In the following, it may be assumed that the winch assembly is a heavy-duty winch with a long wire wound on a drum, a motor to drive the winch, and a control unit. The length of the winch wire can be assumed to extend from the upper level of the tower to the lower level. The winch motor can be connected to a power supply provided in the tower, for example a generator installed temporarily in the tower to provide power for tools and equipment.

In the following, without restricting the invention in any way, it may be assumed that the upper level of the tower comprises a platform or similar installed near the top of the tower. At this level, the power cables are arranged in a cable hang-off, with sufficient "cable loop" to allow for rotation of the wind turbine nacelle (when the completed wind turbine is operational). The terms "upper level", "upper platform" and "cable loop platform" may be used interchangeably in the following. The terms "lower level" and "tower base" may be used interchangeably.

The wind turbine tower can be made entirely of steel, or entirely of concrete or some other material. Equally, the wind turbine tower can be a hybrid structure, with an upper tower portion made of steel. In the following, without restricting the invention in any way, it may be assumed that the upper portion of the tower is made of steel, for example stacked steel tower sections.

The transport unit can be realised in any suitable manner, for example it can be a closed structure dimensioned to accommodate components of the winch assembly. In a particularly preferred embodiment of the invention, the transport unit comprises an open frame structure dimensioned to accommodate the winch assembly. The open frame structure can be essentially rectangular in shape, allowing access to the winch components. The transport unit can be realised so that components of the winch assembly can be arranged inside the frame structure and attached to the frame structure so that, even if the transport unit is tilted onto one side, the winch assembly remains securely in place.

The transport unit can be moved about on a cart, barrow or trolley. Alternatively, in a preferred embodiment of the invention, the transport unit itself is equipped with casters or rollers so that it can be moved about with ease.

As indicated above, the transport unit is preferably transferred between tower levels using a service elevator or similar. Such an elevator is generally quite compact, with floor space in the order of one square metre. The footprint of a winch assembly (and therefore the footprint of the transport unit) may need to be larger than this available area. Preferably, the transport unit is designed so that the components of the winch assembly can be accommodated by a rectangular frame structure which, when tilted onto one of its four side faces, fits into such a service elevator, even if the footprint of the transport unit would exceed the available floor space.

During a cable pulling procedure, the transport unit must be held stationary. This can be achieved in a number of ways, for example by constructing a docking assembly in the form of a rigid holding dock on the upper platform and placing the transport unit inside the holding dock. Such a holding dock must be constructed so that loads can be transferred from the transport unit to the tower. Preferably, the transport unit is secured directly to an immovable element of the tower using a docking assembly that comprises two parts constructed to engage with each other. In a particularly preferred embodiment of the invention, the docking assembly comprises a first part for securing to an interior surface of the tower, and a complementary second part of the docking assembly is formed on the frame structure of the transport unit. These parts can be realised in the manner of a locking assembly, for example as an arrangement of one or more twistlocks on the transport unit, and a corresponding arrangement of castings welded to the platform and/or to the tower wall. Preferably, the first part of the docking assembly is a steel bracket welded to the wall of a steel tower section. This wall-mounted bracket can be a relatively cheap component and can remain permanently attached to the tower wall. A complementary docking bracket is formed as part of the transport unit. The docking brackets can be joined in any suitable manner, for example by bolting them together using threaded fasteners, by an arrangement of clamping connectors, etc. In a particularly preferred embodiment of the invention, the brackets are preferably provided with a vertical arrangement of aligning holes and/or a horizontal arrangement of aligning holes, so that a connecting pin or rod can be inserted through each set of aligned holes to join the brackets of the docking assembly in a straightforward manner without the need for power tools.

In this way, the transport unit can be docked to the tower so that the winch can exert a sufficiently large pulling force on the winch cable. During a cable pulling procedure, the free end of a power cable must be pulled through an aperture in the upper platform. The cable guide of the cable pulling arrangement supports the winch cable so that it does not make contact with the edge of such an aperture.

The cable guide is preferably realised so that it can be mounted to an immovable structure at the upper platform, for example to the platform itself and/or to any other structural element or permanently installed component. The cable guide serves to change the direction of the winch wire from essentially horizontal (between winch and cable guide) and vertical (between cable guide and tower base), and also to change the direction of a power cable from vertical (from tower base to cable guide) to essentially horizontal (from the cable guide into the upper platform area) so that the free end of the power cable can be secured, for example in a junction box installed on the upper platform. To this end, the cable guide preferably comprises a vertically arranged part in the form of a quarter-disc or the quadrant of a circle, referred to in the following as the cable deflector, and this in turn can be mounted on and/or held by suitable supporting elements as will become clear from the description of the drawings. The cable deflector is set up so that it presents a curved path in the form of a quarter circle, along which the winch wire and power cable can be guided.

In a particularly preferred embodiment of the invention, the cable guide comprises a sheave or pulley wheel adapted to locate the winch wire, i.e. the wire is located in a suitably dimensioned groove of the sheave. It shall be understood that the sheave is free to rotate about its axle in the usual manner. In a particularly preferred embodiment of the invention, the cable guide comprises a rotary sheave support structure that allows the sheave to follow the curved path of the cable deflector.

The sheave of the cable guide serves to bring the free end of the power cable into the upper level. To this end, the cable guide is provided with a stop that allows the winch wire to pass through, but not the power cable. Therefore, when the winch wire is being lowered to the tower base, the sheave is in its lowest position. When the winch wire is being retracted and the free end of the power cable reaches the stop, the continued pulling action on the winch wire causes the sheave support structure to rotate, bringing the free end of the power cable upwards and inwards, into the reach of technicians who can grasp the free end and guide it into a junction box, where the power cable is permanently secured in place. Preferably, the cable guide further comprises an arrangement of rollers that serve to support and guide a portion of the winch wire that is not supported by the sheave when the sheave is at its lowest position. These rollers, which can be smaller than the sheave, may be arranged at equally-spaced intervals along the curved outer edge of the cable deflector.

To perform a cable pulling procedure, the winch wire is placed over the cable guide and the winch is actuated to lower the free end of the winch wire to the tower base, where it can be attached to a cover or end-piece placed over the free end of a power cable. At this point, as explained above, the sheave is at its lowest position. The winch assembly is then actuated to pull the power cable to the upper level of the tower, where its arrival at the cable stop causes the rotary sheave support to turn through 90, bringing the free end of the cable into the upper level, where the power cable can be secured in a junction box. The winch wire is detached from the cable cover, and these steps can be repeated as often as required. After pulling all cables to the upper level, the cable pulling arrangement is disassembled and conveyed out of the tower, and can be brought to another wind turbine installation site to carry out another cable pulling procedure.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an exemplary embodiment of the inventive cable pulling arrangement;
Figures 2 to 5 illustrate stages of a cable pulling procedure using the inventive cable pulling arrangement;
Figure 6 shows an exemplary transport unit of the inventive cable pulling arrangement;
Figure 7 shows a transport unit of the inventive cable pulling arrangement in a service elevator of a tower;
Figure 8 illustrates stages of a prior art approach.

In the diagrams, like numbers refer to like objects throughout. Objects in the diagrams are not necessarily drawn to scale.

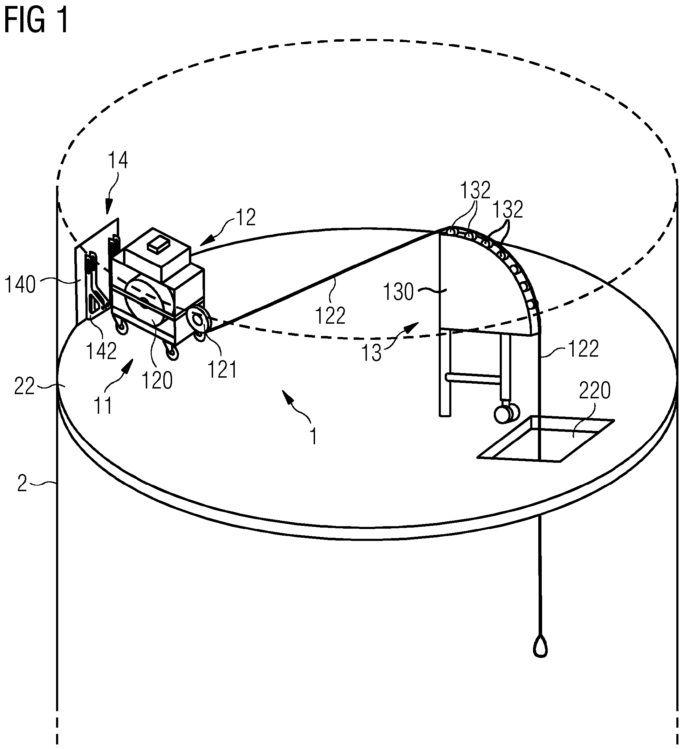

Figure 1 shows an exemplary embodiment of the inventive cable pulling arrangement 1. The cable pulling arrangement 1 comprises a transport unit 11, a heavy-duty winch assembly 12 installed in the transport unit 11, a cable guide 13 and a docking means 14.

The transport unit 11 comprises a robust frame 110 constructed to accommodate components of the winch assembly 12, i.e. a wire drum 120 loaded with wire 122, a wire wheel 121 that may be provided to guide the wire to the drum 120, a motor 124 to turn the drum 120, and a winch control module 126. The transport unit 11 is constructed to allow it to be moved between levels of a wind turbine tower 2, for example it can be designed to fit into a service elevator so that it can be transported to a cable loop platform 22 as shown here, and back down to the tower base after completion of a cable pulling task. Here, the frame 110 is on wheels 118 so that the loaded transport unit 11 can be moved about with relative ease.

The cable pulling arrangement 1 further comprises a means 14 of docking the frame 110 to an immovable object, for example to the inside wall of the tower 2 as shown here. In this exemplary embodiment, the docking means 14 of the cable pulling arrangement 1 comprises a wall bracket 140 which can secured to the inside wall of the tower 2, and the frame 110 is constructed to engage with the wall bracket 140. In this exemplary embodiment, the frame 110 is provided with a docking bracket 142 that is shaped to engage with the wall-mounted bracket 140.

The cable guide 13 serves to carry much of the weight of a power cable 5 during a pulling procedure and to change the orientation of the power cable 5 once this has been raised to the level of the cable loop platform 22. To this end, the cable guide 13 comprises an upright structure 130, part of which is shaped as a quarter circle, with a number of rollers 132, a sheave 134 and a sheave pivot 136. The rollers 132 and the sheave 134 serve to locate or guide the winch wire 122 as it passes over the curved structure 130. The sheave 134 is mounted to the sheave pivot 136, which can rotate or slide through an angular range as indicated. A cable stop 138 is mounted to the sheave pivot 136, and has an aperture that allows only the winch wire 122 to pass through.

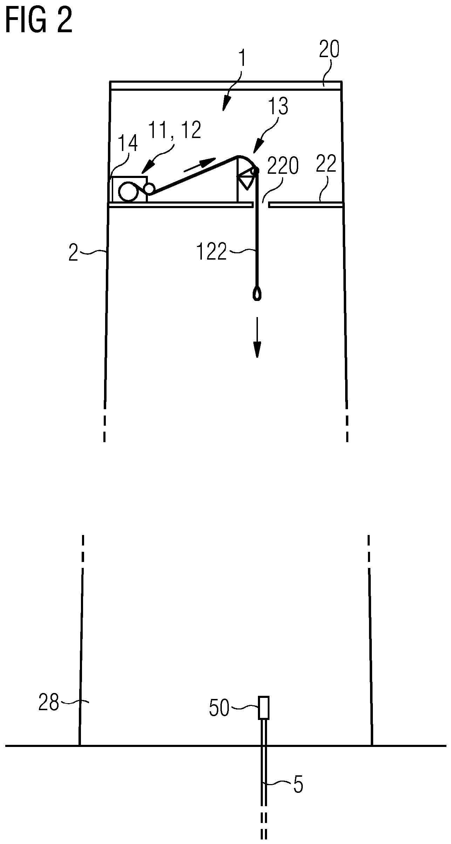

Figures 2 - 5 illustrate stages of a cable pulling task using the inventive cable pulling arrangement 1. After bringing the components of the cable pulling arrangement 1 to an upper platform 22, the frame 110 is secured to the tower wall using a docking means 14, and the cable guide 13 is set up beside an aperture 220 in the platform 22.

In a first stage of a cable pulling task as shown in Figure 2, the winch wire 122 is passed over the rollers 132 and the sheave 134 and through the cable stop 138, and the winch 12 is operated to lower the free end of the winch wire 122 to the base 28 of the tower 2, where it is connected to an end cover 50 of a power cable 5, i.e. to a protective cover 50 placed over the free end of a power cable 5.

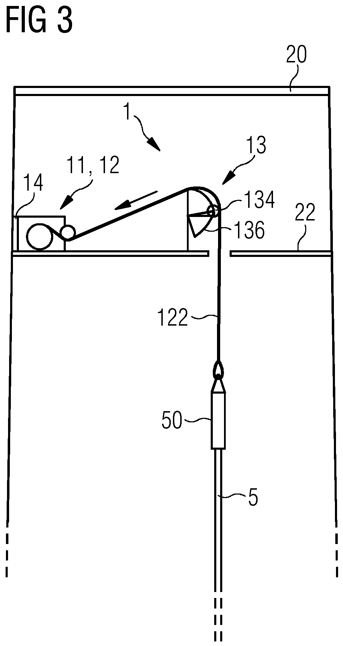

In a second stage of the cable pulling task as shown in Figure 3, the winch 12 is operated to pull in the winch wire 122, thereby raising the power cable 5 upwards towards the cable loop platform 22 and the cable guide 13.

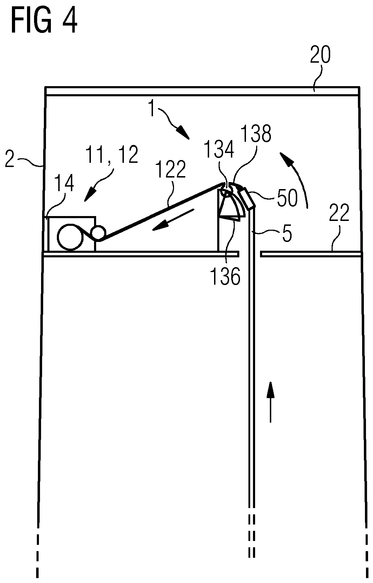

Since the cable cover 50 cannot pass through the cable stop 138, when the cable cover 50 reaches the stop 138 as shown in Figure 4, the pulling action on the winch wire 122 now also acts on the stop 138, causing the sheave pivot 136 to rotate as shown. This rotating action brings the free end 50 of the cable 5 sideways into that level of the tower 2.

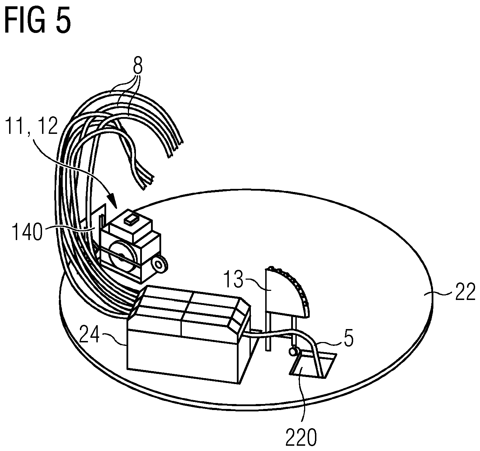

The vertically suspended power cable 5 can be supported using any suitable means as will be known to the skilled person, for example the power cables can be clamped to the tower wall at multiple intervals between the tower base 28 and the cable loop platform 22. Once the power cable 5 is supported over its vertical length, its free end can be secured to a junction box 24 as indicated in Figure 5.

After detaching the winch wire 122 from the secured power cable 5, the cable pulling arrangement 1 can be deployed to raise a further power cable to the cable loop platform 22.

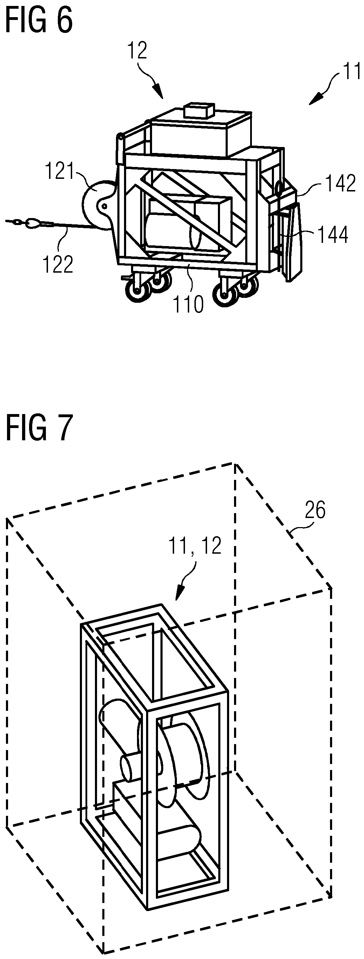

Figure 6 is a further view of the transport unit 11, showing details of an exemplary docking means 14. Here, the rear of the frame 110 is provided with a docking bracket 142 that matches a wall-mounted bracket 140. The brackets 140, 142 have holes that align, so that a pin 144 can be inserted through the holes in order to dock the frame 110 to the tower wall.

Figure 7 shows a stage during assembly/disassembly of the inventive cable pulling arrangement 1. Here, the transport unit 11 (loaded with the winch 12) is placed in a service elevator 26 of a wind turbine tower 2 and can be transferred between tower levels, e.g. from the tower base to the cable loop platform, or from the cable loop platform to the tower base. After removing the transport unit 11 and winch 12 from the service elevator 26, the cable guide 13 can be transferred between tower levels. Of course, if their dimensions allow it, all components of the cable pulling arrangement 1 can be transferred together in the service elevator 26.

The diagram illustrates the favourably compact realisation of the transport unit 11. The ability to transfer the components of the cable pulling arrangement 1 between levels of the tower 2 using only a service elevator 26 means that the cable pulling procedure can be completed without the expense of a crane.

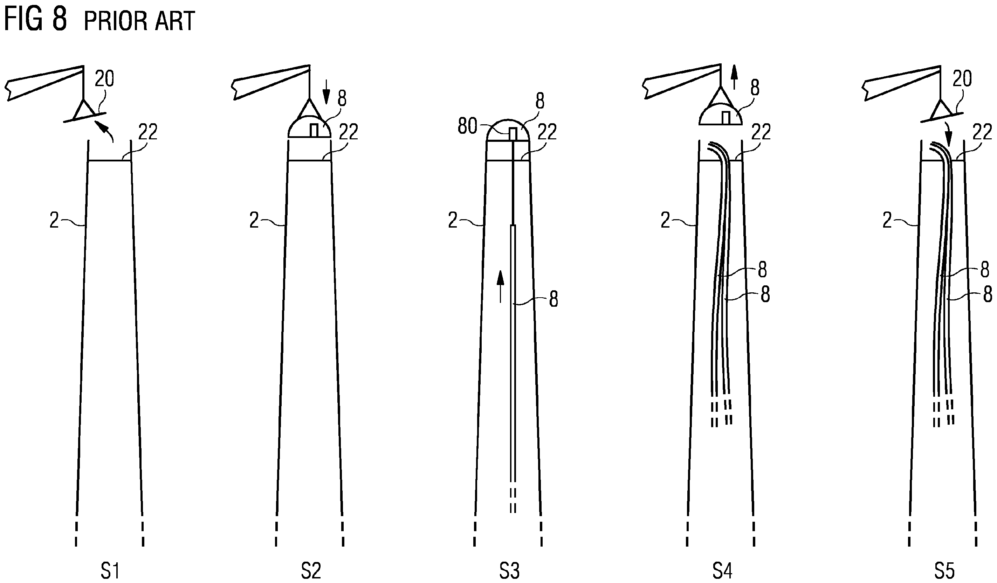

Figure 8 illustrates stages of a prior art approach. In a first stage S1, the top cover 20 of a wind turbine tower 2 is removed using a crane as indicated. In a next stage S2, a cable pulling arrangement 8 is hoisted into place and installed on top of the tower 2. The cable pulling arrangement includes a cover to close off the tower 2, preventing rain from entering the tower, and a heavy-duty pulling unit 80. In a subsequent stage S3, the pulling unit 80 of the cable pulling arrangement 8 is deployed to pull a power cable 5 from the base of the tower 2 to the upper level 22, for connection to a hang-off arrangement. When all cables 5 have been pulled to the cable loop platform 22 and secured to the hang-off arrangement, the cable pulling arrangement 8 is removed in stage S4, and the top cover 20 of the wind turbine tower 2 is replaced in stage S5. Since the total weight of such a cable pulling arrangement can be several metric tonnes, it may only be lifted by crane during low wind speeds. The need to wait for a safe weather "window" may extend the duration of stages S1 - S5, with correspondingly high crane rental costs. Furthermore, rain may enter the tower between stage S1 and stage S2 and/or between stage S4 and stage S5, leading to additional expense if a drying procedure is then needed before the cable installation procedure can continue.

Although the present invention has been disclosed in the form of preferred embodiments and variations thereon, it will be understood that numerous additional modifications and variations could be made thereto without departing from the scope of the invention. For example, the cable guide can be realised in any number of ways to combine the functions of supporting the winch wire and also deflecting the upper end of the power cable sideways. The "quarter circle" shape of the cable guide described above is simply one possible shape for a structure that guides the winch wire, and the sheave pivot is simply one possible way of achieving a sideways deflection of the upper end of the power cable.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module. Any pronoun denoting a specific gender shall be understood to apply equally to any gender identity.

## Claims

1. A cable pulling arrangement (1) for use in the installation of power cables (5) in a wind turbine tower (2), comprising
- a transport unit (11) adapted to transport a winch assembly (12) between levels (22, 28) of the tower (2);
- a docking assembly (14) adapted to dock the transport unit (11) to the tower (2); and
- a cable guide (13) adapted to guide a winch wire (122) between levels (22, 28) of the tower (2) during a cable pulling procedure.

2. A cable pulling arrangement according to the preceding claim, wherein the transport unit (11) comprises a frame structure (110) dimensioned to accommodate the winch assembly (12).

3. A cable pulling arrangement according to any of the preceding claims, wherein the docking assembly (14) comprises a first part (140) for securing to an interior surface of the tower (2), and wherein the transport unit (11) comprises a complementary second part (142) of the docking assembly (14).

4. A cable pulling arrangement according to the preceding claim, wherein the first part (140) of the docking assembly (14) is a steel bracket (140) welded to the wall of a steel tower section (2).

5. A cable pulling arrangement according to any of the preceding claims, wherein the transport unit (11) is dimensioned to fit in a service elevator (26) of the wind turbine tower (2).

6. A cable pulling arrangement according to any of the preceding claims, wherein the cable guide (13) comprises a sheave (134) adapted to locate the winch wire (122).

7. A cable pulling arrangement according to the preceding claim, wherein the sheave axle is mounted on a rotary structure (136).

8. A cable pulling arrangement according to the preceding claim, wherein the rotary structure (136) is adapted to carry the sheave (134) through a quarter-turn.

9. A cable pulling arrangement according to claim 7 or claim 8, wherein the cable guide (13) comprises a cable stop (138) mounted on the rotary structure (136), which cable stop (138) is dimensioned to accommodate only the winch wire (122).

10. A cable pulling arrangement according to any of the preceding claims, wherein the cable guide (13) is adapted for mounting to a platform (22) of the tower (2).

11. A method of performing a cable pulling procedure using a cable pulling arrangement (1) according to any of claims 1 to 10, which method comprises preparatory steps of
- deploying the transport unit (11) to transport a winch assembly (12) to an upper level (22) of the tower (2);
- docking the transport unit (11) to an interior surface of the tower (2); and
- deploying the cable guide (13) to guide the winch wire (122) from the upper level (22) of the tower (2) to a lower level (28) of the tower (2).

12. A method according to the preceding claim, comprising subsequent steps of
- attaching the winch wire (122) to a cable cover (50) mounted onto the free end of a power cable (5); and
- actuating the winch assembly (12) to pull the power cable (5) to the upper level (22) of the tower (2).

13. A method according to any of the preceding method claims, comprising subsequent steps of
- detaching the winch wire (122) from the cable cover (50); and
- securing the power cable (5) in a junction box (24) installed at the upper level (22).

14. A method according to any of the preceding method claims, wherein the transport unit (11) is conveyed in a service elevator (26) of the tower (2) to transport the winch assembly (12) between levels (22, 28) of the tower (2).

15. A method according to any of the preceding method claims, comprising a further preparatory step of securing the first part (140) of the docking assembly (14) to an interior surface of the tower (2).
